# EUROPEAN PATENT SPECIFICATION

(11) **EP 1 214 663 B1**
(45) Date of publication and mention of the grant of the patent: **14.06.2006**
(21) Application number: 00963270.4
(22) Date of filing: 24.08.2000
(51) Int. Cl.: G06F 15/16

(54) **SCALABLE FILE SERVER WITH HIGHLY AVAILABLE PAIRS**
SKALIERBARER DATEISERVER MIT HOCHVERFÜGBAREN PAAREN
SERVEUR DE FICHIER SCALAIRE A PAIRES A HAUTE DISPONIBILITE

(30) Priority: 24.08.1999 US 150453 P; 25.08.1999 US 383340
(43) Date of publication of application: 19.06.2002
(73) Proprietor: Network Appliance, Inc., Sunnyvale, CA 94089 (US)
(72) Inventor: KLEIMAN, Steven, Robert, Los Altos, CA 94022 (US)
(74) Representative: Leeming, John Gerard
(86) International application number: PCT/US2000/023349
(87) International publication number: WO 2001/014991

(56) References cited:
- US-A- 5 668 943
- US-A- 5 862 312
- KLEIMAN S R ET AL: "Using NUMA interconnects for highly available filers" IEEE MICRO, JAN.-FEB. 1999, IEEE, USA, vol. 19, no. 1, pages 42-48, XP002164052 ISSN: 0272-1732
- BUDDHIKOT M M ET AL: "Design of a large scale multimedia storage server" COMPUTER NETWORKS AND ISDN SYSTEMS,NL,NORTH HOLLAND PUBLISHING. AMSTERDAM, vol. 27, no. 3, 1 December 1994 (1994-12-01), pages 503-517, XP004037983 ISSN: 0169-7552

## Description

### Background of the Invention

### 1. Field of the Invention

The invention relates to storage systems.

### 2. Related Art

U.S. Patent No. 5,688,943 (Attanasio et al.) ("the '943 patent" hereinafter) shows a system and method for recovering from failure in a disk access path of a clustered computing system. In the '943 patent, nodes communicate through an interconnection. The nodes include a processor, memory (possibly shared among nodes), and a number of disk adapters. Disks in the '943 patent can be shared by multiple nodes, providing for recovery from disk access failures.

In an article by the inventor, Steven R. Kleiman, and others, entitled "Using NUMA Interconnections for Highly Available Filers," two independent file server appliances are connected via a nonuniform-memory-access network. This system provides some survivability to hardware faults with minimal disruption to clients.

More generally, computer storage systems are used to record and retrieve data. One way storage systems are characterized is by the amount of storage capacity they have. The capacity for storage systems has increased greatly over time. One problem in the known art is the difficulty of planning ahead for desired increases in storage capacity. A related problem in the known art is the difficulty in providing scalable storage at a relatively efficient cost. This has subjected customers to a dilemma; one can either purchase a file system with a single large file server, or purchase a file system with a number of smaller file servers.

The single-server option has several drawbacks. (1) The customer must buy a larger file system than currently desired, so as to have room available for future expansion. (2) The entire file system can become unavailable if the file server fails for any reason. (3) The file system, although initially larger, is not easily scalable if the customer comes to desire a system that is larger than originally planned capacity.

The multi-server option also has several drawbacks. In systems in which the individual components of the multi-server device are tightly coordinated, (1) the same scalability problem occurs for the coordinating capacity for the individual components. That is, the customer must buy more coordinating' capacity than currently desired, so as to have room available for future expansion. (2) The individual components are themselves often obsolete by the time the planned-for greater capacity is actually needed. (3) Tightly coordinated systems are often very expensive relative to the amount of scalability desired.

In systems in which the individual components of the multi-server device are only loosely coordinated, it is difficult to cause the individual components to behave in a coordinated manner so as to emulate a single file server. Although failure of a single file server does not cause the entire file system to become unavailable, it does cause any files stored on that particular file server to become unavailable. If those files were critical to operation of the system, or some subsystem thereof, the applicable system or subsystem will be unavailable as a result. Administrative difficulties generally increase to due to a larger number of smaller file servers.

Accordingly, it would be advantageous to provide a method and system for performing a file server system that is scalable, that is, which can be increased in capacity without major system alterations, and which is relatively cost efficient with regard to that scalability. This advantage is achieved in an embodiment of the invention in which a plurality of file servers (each a pair of file server nodes) are interconnected. Each file server has a pair of controllers for simultaneously controlling a set of storage elements such as disk drives. File server commands are routed among file servers to the file servers having control of applicable storage elements, and in which each pair of file server nodes is reliable due to redundancy.

It would also be advantageous to provide a storage system that is resistant to failures of individual system elements, and that can continue to operate after any single point of failure. This advantage is achieved in an embodiment of the invention like that described in "Highly Available File Servers," WO 99/46680 (Network Appliance, Inc.), published on 16 September 1999.

The invention provides a file server system and a method for operating that system, which are defined in the appended claims and are easily scalable in number and type of individual components. A plurality of file servers (each including a pair of file server nodes) are coupled using inter-node connectivity, such as an inter-node network, so that any one pair can be accessed from any other pair. Each file server includes a pair of file server nodes, each of which has a memory and each of which conducts file server operations by simultaneously writing to its own memory and to that of its twin, the pair being used to simultaneously control a set of storage elements such as disk drives. File server commands or requests directed to particular mass storage elements are routed among file server nodes using an inter-node switch and processed by the file server nodes controlling those particular storage elements. Each file server (that is, each pair of file server nodes) is reliable due to its own redundancy.

In a preferred embodiment, the mass storage elements are disposed and controlled to form a redundant array, such as a RAID (Redundant Array of Independent Disks) storage system. The inter-node network and inter-node switch are redundant, and file server commands or requests arriving at the network of pairs are coupled using the network and the switch to the appropriate pair and processed at that pair. Thus, each pair can be reached from each other pair, and no single point of failure prevents access to any individual storage element. The file servers are disposed and controlled to recognize failures of any single element in the file server system and to provide access to all mass storage elements despite any such failures.

### Brief Description of the Drawings

Figure 1 shows a block diagram of a scalable and highly available file server system.
Figure 2A shows a block diagram of a first interconnect system for the file server system.
Figure 2B shows a block diagram of a second interconnect system for the file server system.
Figure 3 shows a process flow diagram of operation of the file server system.

### Detailed Description of the Preferred Embodiment

In the following description, a preferred embodiment of the invention is described with regard to preferred process steps and data structures. However, those skilled in the art would recognize, after perusal of this application, that embodiments of the invention may be implemented using one or more general purpose processors (or special purpose processors adapted to the particular process steps and data structures) operating under program control, and that implementation of the preferred process steps and data structures described herein using such equipment would not require undue experimentation or further invention.

Inventions described herein can be used in conjunction with inventions described in "Highly Available File Servers," WO 99/46680 (Network Appliance, Inc.), published on 16 September 1999. This application is herein referred to as the "Availability Disclosure."

### File Server System

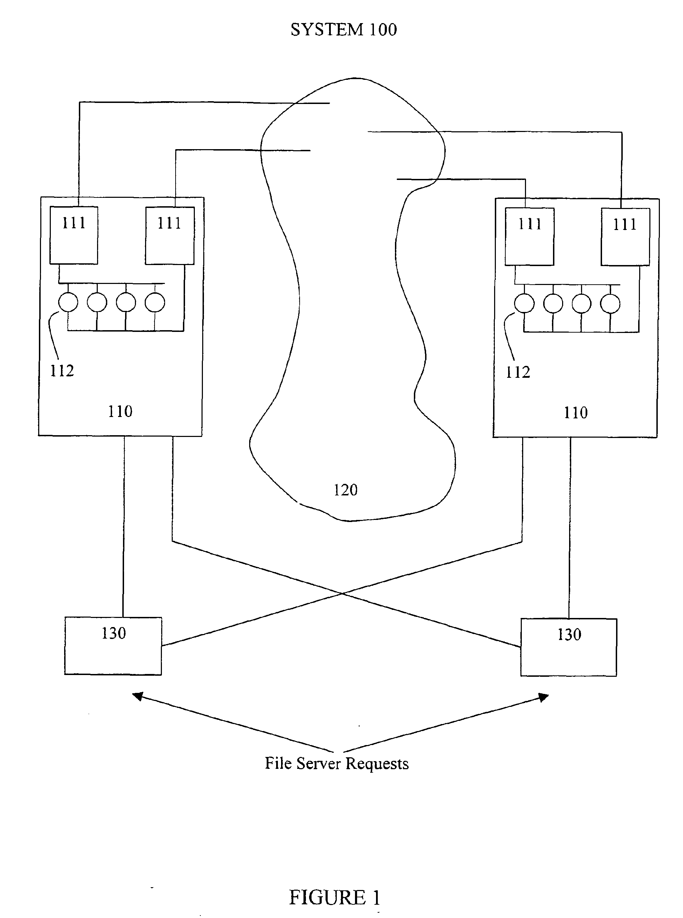

Figure 1 shows a block diagram of a scalable and highly available file server system.

A file server system 100 includes a set of file servers 110, each including a coupled pair of file server nodes 111 having co-coupled common sets of mass storage devices 112. Each node 111 is like the file server node further described in the Availability Disclosure. Each node 111 preferably includes its own memory and processor and is coupled to a common interconnect 120. Each node 111 is also coupled to a first network switch 130 and a second network switch 130.

Each node 111 is coupled to the common interconnect 120, so as to be able to transmit information between any two file servers 110. The common interconnect 120 includes a set of communication links (not shown) which are redundant in the sense that even if any single communication link fails, each node 111 can still be contacted by each other node 111.

In a preferred embodiment, the common interconnect 120 includes a NUMA (non-uniform memory access) interconnect, such as the SCI (Scalable Coherent Interconnect) interconnect operating at 1 gigabyte per second or the SCI-lite interconnect operating at 125 megabytes per second.

Each file server 110 is coupled to the first network switch 130, so as to receive and respond to file server requests transmitted therefrom. In a preferred embodiment there is also a second network switch 130, although the second network switch 130 is not required for operation of the file server system 100. Similar to the first network switch 130, each file server 110 is coupled to the second network switch 130, so as to receive and respond to file server requests transmitted therefrom.

### File Server System Operation

In operation of the file server system 100, as further described herein, a sequence of file server requests arrives at the first network switch 130 or, if the second network switch 130 is present, at either the first network switch 130 or the second network switch 130. Either network switch 130 routes each file server request in its sequence to the particular file server 110 that is associated with the particular mass storage device needed for processing the file server request.

One of the two nodes 111 at the designated file server 110 services the file server request and makes a file server response. The file server response is routed by one of the network switches 130 back to a source of the request.

### Interconnect System

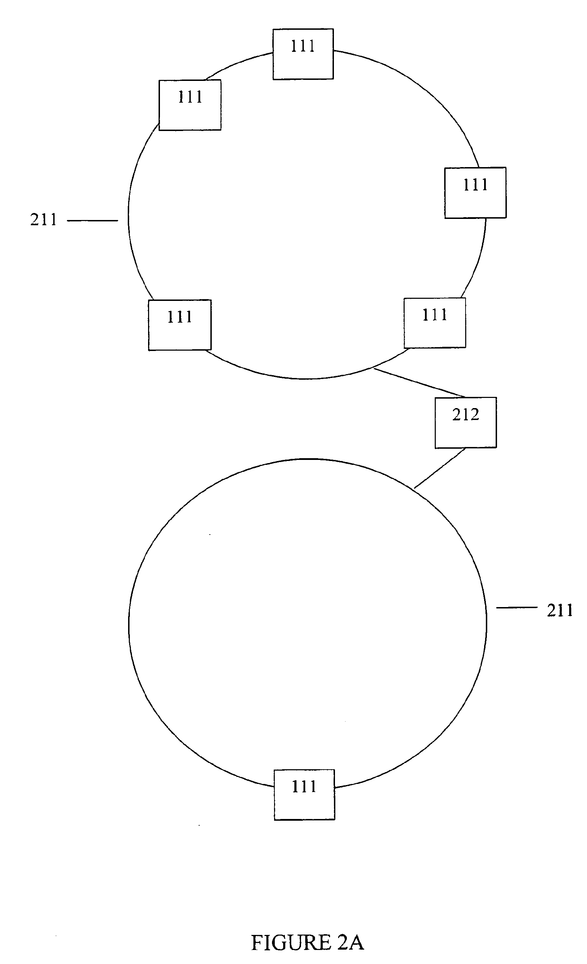

Figure 2A shows a block diagram of a first interconnect system for the file server system.

In a first preferred embodiment, the interconnect 120 includes a plurality of nodes 111, each of which is part of a file server 110. The nodes 111 are each disposed on a communication ring 211. Messages are transmitted between adjacent nodes 111 on each ring 211.

In this first preferred embodiment, each ring 211 comprises an SCI (Scalable Coherent Interconnect) network according to IEEE standard 1596-1992, or an SCI-lite network according to IEEE standard 1394.1. Both IEEE standard 1596-1992 and IEEE standard 1394.1 support remote memory access and DMA; the combination of these features is often called NUMA (non-uniform memory access). SCI networks operate at a data transmission rate of about 1 gigabyte per second; SCI-lite networks operate at a data transmission rate of about 125 megabytes per second.

A communication switch 212 couples adjacent rings 211. The communication switch 212 receives and transmits messages on each ring 211, and operates to bridge messages from a first ring 211 to a second ring 211. The communication switch 212 bridges those messages that are transmitted on the first ring 211 and designated for transmission to the second ring 211. A switch 212 can also be coupled directly to a file server node 110.

In this first preferred embodiment, each ring 211 has a single node 111, so as to prevent any single point of failure (such as failure of the ring 211 or its switch 212) from preventing communication to more than one node 111.

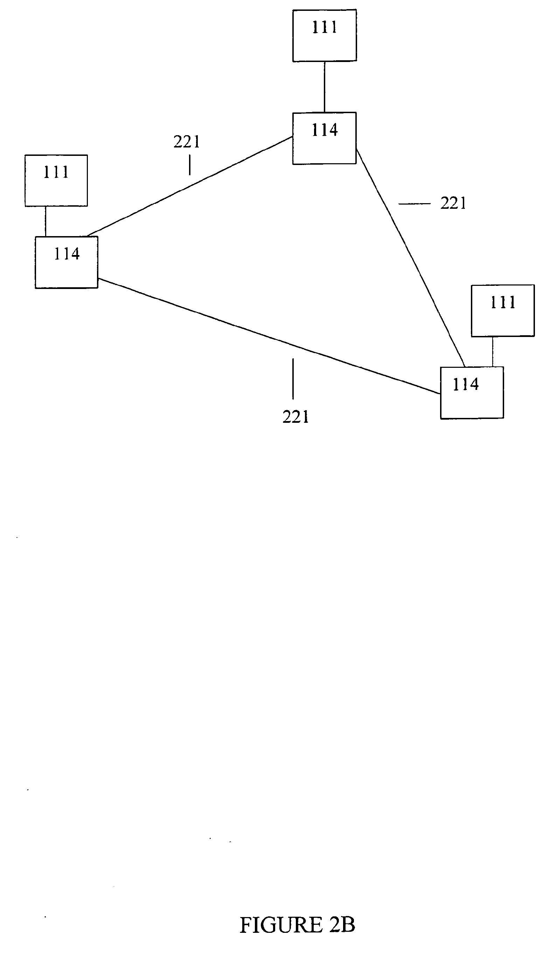

Figure 2B shows a block diagram of a second interconnect system for the file server system.

In a second preferred embodiment, the interconnect 120 includes a plurality of nodes 111, each of which is part of a file server 110. Each node 111 includes an associated network interface element 114. In a preferred embodiment, the network interface element 114 for each node 111 is like that described in the Availability Disclosure.

The network interface elements 114 are coupled using a plurality of communication links 221, each of which couples two network interface elements 114 and communicates messages therebetween.

The network interface elements 114 have sufficient communication links 221 to form a redundant communication network, so as to prevent any single point of failure (such as failure of any one network interface element 114) from preventing communication to more than one node 111.

In this second preferred embodiment, the network interface elements 114 are disposed with the communication links 221 to form a logical torus, in which each network interface element 114 is disposed on two logically orthogonal communication rings using the communication links 221.

In this second preferred embodiment, each of the logically orthogonal communication rings comprises an SCI network or an SCI-lite network, similar to the SCI network or SCI-lite network described with reference to figure 2A.

### Operation Process Flow

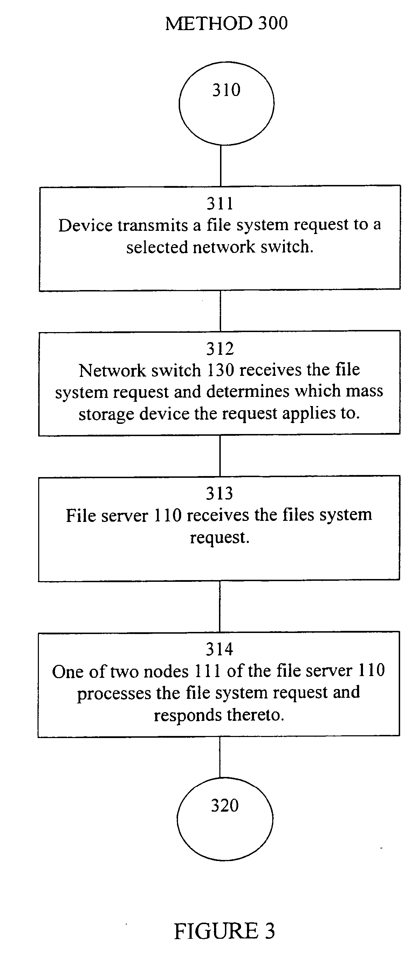

Figure 3 shows a process flow diagram of operation of the file server system.

A method 300 is performed by the components of the file server system 100, and includes a set of flow points and process steps as described herein.

At a flow point 310, a device coupled to the file server system 100 desires to make a file system request.

At a step 311, the device transmits a file system request to a selected network switch 130 coupled to the file server system 100.

At a step 312, the network switch 130 receives the file system request. The network switch 130 determines which mass storage device the request applies to, and determines which file server 110 is coupled to that mass storage device. The network switch 130 transmits the request to that file server 110 (that is, to both of its nodes 111 in parallel), using the interconnect 120.

At a step 313, the file server 110 receives the file system request. Each node 111 at the file server 110 queues the request for processing.

At a step 314, one of the two nodes 111 at the file server 110 processes the file system request and responds thereto. The other one of the two nodes 111 at the file server 110 discards the request without further processing.

At a flow point 320, the file system request has been successfully processed.

If any single point of failure occurs between the requesting device and the mass storage device to which the file system request applies, the file server system 100 is still able to process the request and respond to the requesting device.
- If either one of the network switches 130 fails, the other network switch 130 is able to receive the file system request and transmit it to the appropriate file server 110.
- If any link in the interconnect 120 fails, the remaining links in the interconnect 120 are able to transmit the message to the appropriate file server 110.
- If either node 111 at the file server 110 fails, the other node 111 is able to process the file system request using the appropriate mass storage device. Because nodes 111 at each file server 110 are coupled in pairs, each file server 110 is highly available. Because file servers 110 are coupled together for managing collections of mass storage devices, the entire system 100 is scalable by addition of file servers 110. Thus, each cluster of file servers 110 is scalable by addition of file servers 110.
- If any one of the mass storage devices (other than the actual target of the file system request) fails, there is no effect on the ability of the other mass storage devices to respond to processing of the request, and there is no effect on either of the two nodes 111 which process requests for that mass storage device.

### Alternative Embodiments

Although preferred embodiments are disclosed herein, many variations are possible which remain within the scope, of the invention, and these variations would become clear to those skilled in the art after perusal of this application.

## Claims

1. A file server system including
a plurality of file server nodes (111);
at least one inter-node connectivity element (120) coupled to said plurality of nodes;
at least one switch (13) coupled to said plurality of nodes and disposed for coupling file server commands to ones thereof;
**characterized in that** at least some of said nodes (111) are arranged in pairs in file servers, and in each of said file servers, both nodes are coupled to each storage element in a set of storage elements (112) for the file server (110), and both nodes (111) include at least a processor and a memory so as to be disposed to control said storage elements (112) in response to said file server commands, with said file server commands directed toward one of said file servers and then serviced by a designated one of said file server nodes in said one of said file servers.

2. A system as in claim 1, wherein at least some of said pairs are disposed for failover from a first node to a second node.

3. A system as in claim 1, wherein
each said storage element corresponds to one said pair;
each said storage element is coupled to both nodes in said corresponding pair;
whereby both nodes in said corresponding pair are equally capable of controlling said storage element.

4. A system as in claim 1, wherein said connectivity element includes a NUMA network.

5. A system as in claim 1, wherein said file server system is scalable by addition of a server comprising a set of pairs of said nodes.

6. A systein as in claim 1, wherein said set of storage elements coupled to at least one said pair includes a RAID storage system.

7. A system as in claim 1, wherein
each pair includes a first node and a second node;
each pair is disposed to receive file server commands directed to either said first node or to said second node;
each pair is disposed when said file server commands are directed to said first node to execute said file server commands at said first node and to store a copy of said file server commands at said second node; and
each pair is disposed when said file server commands are directed to said second node to execute said file server commands at said second node and to store a copy of said file server commands at said first node.

8. A system as in claim 7, wherein
each said pair is disposed when said file server commands are directed to said first node and said first node is inoperable to execute said file server commands at said second node; and
each pair is disposed when said file server commands are directed to said second node and said second node is inoperable to execute said file server commands at said first node.

9. A system as in claim 1, wherein
each pair is disposed to receive a file server command;
each pair is disposed so that a first node responds to said file server command while a second node records said file server command; and
each pair is disposed to failover from said first node to said second node.

10. A system as in claim 9, wherein
each pair is disposed to receive a second file server command;
each pair is disposed so that said second node responds to said second file server command while said first node records said file server command; and
each pair is disposed to failover from said first node to said second node.

11. A system as in claim 9, wherein said first node controls said storage elements in response to said file server command while said second node is coupled to said storage elements and does not control said storage elements in response to said file server command.

12. A method of operating a file server system, said method including steps for
operating a plurality of file server nodes (111) in sets of pairs, each said pair included in a file server (110), both nodes for each file server (110) being coupled to each storage element in a set of storage elements (112) for the file server (110), and both nodes (111) for each file server (110) including at least a processor and a memory so as to be disposed to control said storage elements (112) in response to a set of file server commands, with said file server commands directed toward one of said file servers and then serviced by a designated one of said file server nodes in said one of said file servers;
coupling said file server commands to said pairs of nodes (110, 111);
coupling a set of messages between ones of said nodes (111) in a first of said pairs and ones of said nodes (111) in a second of said pairs.

13. A method as in claim 12, including steps for failover from a first node to a second node, and from said second node to said first node, in each said pair.

14. A method as in claim 12, including steps for scaling said file server by addition of a set of pairs of said nodes.

15. A method as in claim 12, including steps for controlling a set of storage elements corresponding to one said pair from either node in said pair.

16. A method as in claim 15, including steps for operating said set of storage elements according to a RAID storage method.

17. A method as in claim 12, including steps for
receiving file server commands directed to either a first node or to a second node in each said pair;
when said file server commands are directed to said first node, responding to said file server commands at said first node and storing a copy of said file server commands at said second node; and
when said file server commands are directed to said second node, responding to said file server commands at said second node and storing a copy of said file server commands at said first node.

18. A method as in claim 17, including steps for
when said file server commands are directed to said first node and said first node is inoperable, responding to said file server commands at said second node using said copy at said second node; and
when said file server commands are directed to said second node and said second node is inoperable, responding to said file server commands at said first node using said copy at said first node.

19. A method as in claim 12, including steps for
receiving a file server command at one said pair;
responding to said file server command at a first node while recording said file server command at a second node; and
failing over from said first node to said second node.

20. A method as in claim 19, including steps for
receiving a second file server command at said one pair;
responding to said file server command at said second node while recording said file server command at said first node; and
failing over from said first node to said second node.

21. A method as in claim 19, including steps for controlling said storage elements in response to said file server command by said first node while said second node is coupled to said storage elements and does not control said storage elements in response to said file server command.

22. A computer program comprising program code means that, when executed on a computer system, cause the computer system to effect the steps of any one of claims 12 to 21.

## Patentansprüche

1. Fileserversystem, umfassend
eine Mehrzahl von Fileserverknoten (111);
mindestens ein an diese Mehrzahl der Knoten gekoppeltes Zwischenknotenverbindungselement (120);
mindestens ein an diese Mehrzahl der Knoten gekoppelter Schalter (13), der zum Koppeln von Fileserverkommandos zu einem dieser Knoten eingerichtet ist;
**dadurch gekennzeichnet, daß** mindestens einige der Knoten (111) als Paare von Fileservern eingerichtet sind, und daß in jedem dieser Fileserver beide Knoten zu allen Speicherelementen in einer Menge von Speicherelementen (112) für den Fileserver (110) gekoppelt sind, und wobei beide Knoten (111) mindestens einen Prozessor und einen Speicher umfassen, um eingerichtet zu sein, das Speicherelement (112) als Antwort auf die Fileserverkommandos zu steuern, wobei die Fileserverkommandos an einen der Fileserver gerichtet sind und dann durch einen bestimmten Fileserverknoten in einem der Fileserver bedient werden.

2. System gemäß Anspruch 1, wobei mindestens einige der Paare als Ausfallsicherung von einem ersten Knoten zu einem zweiten Knoten eingerichtet sind.

3. System gemäß Anspruch 1, wobei jedes Speicherelement zu einem Paar korrespondiert;
jedes Speicherelement ist mit beiden Knoten im korrespondierenden Paar gekoppelt; wobei beide Knoten im korrespondierenden Paar gleichermaßen zum Steuern des Speicherelementes fähig sind.

4. System gemäß Anspruch 1, wobei das Verbindungselement ein NUMA-Netzwerk umfaßt.

5. System gemäß Anspruch 1, wobei das Fileserversystem durch Hinzufügen von Servern, die eine Menge von Paaren von Knoten umfassen, skalierbar ist.

6. System gemäß Anspruch 1, wobei die Menge von Speicherelementen, die an mindestens ein Paar gekoppelt ist, ein RAID-Speichersystem umfaßt.

7. System gemäß Anspruch 1, wobei
jedes Paar einen ersten und einen zweiten Knoten umfaßt;
jedes Paar ist eingerichtet, Fileserverkommandos zu empfangen, die entweder an den ersten Knoten oder an den zweiten Knoten gerichtet sind;
jedes Paar ist eingerichtet, die Fileserverkommandos am ersten Knoten auszuführen und eine Kopie der Fileserverkommandos am zweiten Knoten zu speichern, wenn die Fileserverkommandos an den ersten Knoten gerichtet sind; und
jedes Paar ist eingerichtet, die Fileserverkommandos am zweiten Knoten auszuführen und eine Kopie der Fileserverkommandos am ersten Knoten zu speichern, wenn die Fileserverkommandos an den zweiten Knoten gerichtet sind.

8. System gemäß Anspruch 7, wobei
jedes Paar eingerichtet ist, die Fileserverkommandos am zweiten Knoten auszuführen, wenn die Fileserverkommandos an den ersten Knoten gerichtet sind und der erste Knoten nicht betriebsbereit ist; und
wobei jedes Paar eingerichtet ist, die Fileserverkommandos am ersten Knoten auszuführen, wenn die Fileserverkommandos an den zweiten Knoten gerichtet sind und der zweite Knoten nicht betriebsbereit ist.

9. System gemäß Anspruch 1, wobei
jedes Paar eingerichtet ist, ein Fileserverkommando zu empfangen;
jedes Paar ist derart eingerichtet, daß ein erster Knoten auf das Fileserverkommando antwortet, während ein zweiter Knoten das Fileserverkommando aufzeichnet; und
jedes Paar ist eingerichtet zur Ausfallsicherung vom ersten zum zweiten Knoten überzugehen.

10. System gemäß Anspruch 9, wobei
jedes Paar eingerichtet ist, ein zweites Fileserverkommando zu empfangen;
jedes Paar ist derart eingerichtet, daß der zweite Knoten auf das zweite Fileserverkommando antwortet, während der erste Knoten das Fileserverkommando aufzeichnet; und
jedes Paar ist eingerichtet zur Ausfallsicherung vom ersten zum zweiten Knoten überzugehen.

11. System gemäß Anspruch 9, wobei der erste Knoten als Antwort auf das Fileserverkommando die Speicherelemente steuert, während der zweite Knoten an die Speicherelemente gekoppelt ist und diese Speicherelemente als Antwort auf das Fileserverkommando nicht steuert.

12. Verfahren zum Betreiben eines Fileserversystems, umfassend Schritte zum Betreiben einer Mehrzahl von Fileserverknoten (111) in Mengen von Paaren, wobei jedes Paar in einem Fileserver (110) enthalten ist, wobei beide Knoten für jeden Fileserver (110) zu jedem Speicherelement in einer Menge von Speicherelementen (112) für einen Fileserver (110) gekoppelt sind, und wobei beide Knoten (111) für jeden Fileserver (110) mindestens einen Prozessor und einen Speicher umfassen, um eingerichtet zu sein, die Speicherelemente (112) als Antwort auf eine Menge von Fileserverkommandos zu steuern, wobei die Fileserverkommandos an einen der Fileserver gerichtet sind und dann von einem bestimmten Fileserverknoten in dem Fileserver bedient werden;
zum Koppeln der Fileserverkommandos an die Paare von Knoten (110, 111);
zum Koppeln einer Menge von Nachrichten zwischen einem der Knoten (111) in einem ersten der Paare und einem der Knoten (111) in einem zweiten der Paare.

13. Verfahren gemäß Anspruch 12, umfassend Schritte zur Ausfallsicherung von einem ersten Knoten zu einem zweiten Knoten und von einem zweiten Knoten zu einem ersten Knoten in jedem Paar überzugehen.

14. Verfahren gemäß Anspruch 12, umfassend Schritte zum Skalieren des Fileservers mittels Hinzufügen einer Menge von Paaren von Knoten.

15. Verfahren gemäß Anspruch 12, umfassend Schritte zum Steuern von Speicherelementen, die einem Paar von jeden Knoten des Paares entsprechen.

16. Verfahren gemäß Anspruch 15, umfassend Schritte zum Betreiben der Menge von Speicherelementen gemäß eines RAID-Speicherverfahrens.

17. Verfahren gemäß Anspruch 12, umfassend Schritte zum Empfangen von Fileserverkommandos, die entweder an einen ersten oder an einen zweiten Knoten in jedem Paar gerichtet sind;
Antworten auf die Fileserverkommandos am ersten Knoten und Speichern einer Kopie der Fileserverkommandos am zweiten Knoten, wenn die Fileserverkommandos an den ersten Knoten gerichtet sind; und
Antworten auf die Fileserverkommandos am zweiten Knoten und Speichern einer Kopie der Fileserverkommandos am ersten Knoten, wenn die Fileserverkommandos an den zweiten Knoten gerichtet sind.

18. Verfahren gemäß Anspruch 17, umfassend Schritte zum
Antworten auf die Fileserverkommandos am zweiten Knoten unter Benutzung der Kopie im zweiten Knoten, wenn Fileserverkommandos an den ersten Knoten gerichtet sind und der erste Knoten nicht betriebsbereit ist; und
Antworten auf die Fileserverkommandos am ersten Knoten unter Benutzung der Kopie im ersten Knoten, wenn die Fileserverkommandos an den zweiten Knoten gerichtet sind und der zweite Knoten nicht betriebsbereit ist.

19. Verfahren gemäß Anspruch 12, umfassend Schritte zum Empfangen eines Fileserverkommandos an einem Paar;
zum Antworten auf das Fileserverkommando am ersten Knoten, während eines Aufzeichnens des Fileserverkommandos am zweiten Knoten; und zur Auswahlsicherung vom ersten Knoten zum zweiten Knoten überzugehen.

20. Verfahren gemäß Anspruch 19, umfassend Schritte zum
Empfangen eines zweiten Fileserverkommandos an einem Paar;
zum Antworten auf das Fileserverkommando am zweiten Knoten, während eines Aufzeichnens des Fileserverkommandos am ersten Knoten; und
zur Auswahlsicherung vom ersten Knoten zum zweiten Knoten überzugehen.

21. Verfahren gemäß Anspruch 19, umfassend Schritte zum Steuern der Speicherelemente als Antwort auf die Fileserverkommandos durch den ersten Knoten, während der zweite Knoten an die Speicherelemente gekoppelt ist und die Speicherelemente als Antwort auf die Fileserverkommandos nicht steuert.

22. Computerprogramm, umfassend eine Programmcodeeinrichtung, die bei Ausführung auf einem Computersystem das Computersystem veranlaßt, die Schritte aus einem beliebigen der Ansprüche 12 bis 21 auszuführen.

## Revendications

1. Système de serveur de fichiers incluant
une pluralité de noeuds de serveur de fichiers (111),
au moins un élément de connectivité inter-noeud (120) couplé à ladite pluralité de noeuds,
au moins un commutateur (13) couplé à ladite pluralité de noeuds et disposé pour coupler des instructions de serveur de fichiers à d'autres de celui-ci,
**caractérisé en ce que** au moins certains desdits noeuds (111) sont agencés en paires dans des serveurs de fichiers et, dans chacun desdits serveurs de fichiers, les deux noeuds sont couplés à chaque élément de stockage dans un ensemble d'éléments de stockage (112) pour le serveur de fichiers (110), et les deux noeuds (111) incluent au moins un processeur et une mémoire de manière à être disposés pour commander lesdits éléments de stockage (112) en réponse auxdites instructions de serveur de fichiers, avec lesdites instructions de serveur de fichiers destinées à l'un desdits serveurs de fichiers et prises ensuite en charge par un noeud désigné parmi lesdits noeuds de serveur de fichiers dans ledit serveur parmi lesdits serveurs de fichiers.

2. Système selon la revendication 1, dans lequel au moins certaines desdites paires sont disposées pour un basculement d'un premier noeud à un second noeud.

3. Système selon la revendication 1, dans lequel
chacun desdits éléments de stockage correspond à une desdites paires,
chacun desdits éléments de stockage est couplé aux deux noeuds dans ladite paire correspondante,
de sorte que les deux noeuds dans ladite paire correspondante sont également de commander ledit élément de stockage.

4. Système selon la revendication 1, dans lequel ledit élément de connectivité inclut un réseau NUMA.

5. Système selon la revendication 1, dans lequel ledit système de serveur de fichiers est évolutif par ajout d'un serveur comportant un ensemble de paires dédits noeuds.

6. Système selon la revendication 1, dans lequel ledit ensemble d'éléments de stockage à au moins une desdites paires inclut un système de stockage RAID.

7. Système selon la revendication 1, dans lequel
chaque paire inclut un premier noeud et un second noeud,
chaque paire est disposée pour recevoir des instructions de serveur de fichiers destinées soit audit premier noeud soit audit second noeud,
chaque paire est disposée lorsque lesdites instructions de serveur de fichiers sont destinées audit premier noeud pour exécuter lesdites instructions de serveur de fichiers dans ledit premier noeud et pour stocker une copie desdites instructions de serveur de fichiers dans ledit second noeud, et
chaque paire est disposée lorsque lesdites instructions de serveur de fichiers sont destinées audit second noeud pour exécuter lesdites instructions de serveur de fichiers dans ledit second noeud et pour stocker une copie desdites instructions de serveur de fichiers dans ledit premier noeud.

8. Système selon la revendication 7, dans lequel
chacune desdites paires est disposée lorsque lesdites instructions de serveur de fichiers sont destinées audit premier noeud et ledit premier noeud est inopérant pour exécuter lesdites instructions de serveur de fichiers dans ledit second noeud, et
chaque paire est disposée lorsque lesdites instructions de serveur de fichiers sont destinées audit second noeud et ledit second noeud est inopérant pour exécuter lesdites instructions de serveur de fichiers dans ledit premier noeud.

9. Système selon la revendication 1, dans lequel
chaque paire est disposée pour recevoir une instruction de serveur de fichiers,
chaque paire est disposée de sorte qu'un premier noeud répond à ladite instruction de serveur de fichiers alors qu'un second noeud enregistre ladite instruction de serveur de fichiers, et
chaque paire est disposée pour basculer dudit premier noeud audit second noeud.

10. Système selon la revendication 9, dans lequel
chaque paire est disposée pour recevoir une seconde instruction de serveur de fichiers,
chaque paire est disposée de sorte que ledit second noeud répond à ladite seconde instruction de serveur de fichiers alors que ledit premier noeud enregistre ladite instruction de serveur de fichiers, et
chaque paire est disposée pour basculer dudit premier noeud audit second noeud.

11. Système selon la revendication 9, dans lequel ledit premier noeud commande lesdits éléments de stockage en réponse à ladite instruction de serveur de fichiers alors que ledit second noeud est couplé auxdits éléments de stockage et ne commande pas lesdits éléments de stockage en réponse à ladite instruction de serveur de fichiers.

12. Procédé de mise en fonctionnement d'un système de serveur de fichiers, ledit procédé incluant les étapes consistant à
faire fonctionner une pluralité de noeuds de serveur de fichiers (111) dans des ensembles de paires, chacune desdites paires étant incluse dans un serveur de fichiers (110), les deux noeuds pour chaque serveur de fichiers (110) étant couplés à chaque élément de stockage dans un ensemble d'éléments de stockage (112) pour le serveur de fichiers (110), et les deux noeuds (111) pour chaque serveur de fichiers (110) incluant au moins un processeur et une mémoire de manière à être disposés pour commander lesdits éléments de stockage (112) en réponse à un ensemble d'instructions de serveur de fichiers, lesdites instructions de serveur de fichiers étant destinées à l'un desdits serveurs de fichiers et prises ensuite en charge par un noeud désigné parmi lesdits noeuds de serveur de fichiers dans ledit un serveur parmi lesdits serveurs de fichiers,
coupler lesdites instructions de serveur de fichiers auxdites paires de noeuds (110, 111),
coupler un ensemble de messages entre l'un desdits noeuds (111) dans une première desdites paires et l'un desdits noeuds (111) dans une seconde desdites paires.

13. Procédé selon la revendication 12, incluant des étapes pour basculer d'un premier noeud à un second noeud, et dudit second noeud audit premier noeud, dans chacune desdites paires.

14. Procédé selon la revendication 12, incluant des étapes pour faire évoluer ledit serveur de fichiers par ajout d'un ensemble de paires desdits noeuds.

15. Procédé selon la revendication 12, incluant des étapes pour commander un ensemble d'éléments de stockage correspondant à une desdites paires depuis l'un ou l'autre noeud dans ladite paire.

16. Procédé selon la revendication 15, incluant des étapes pour faire fonctionner ledit ensemble d'éléments de stockagemémoire conformément à un procédé de stockage RAID.

17. Procédé selon la revendication 12, incluant les étapes consistant à
recevoir des instructions de serveur de fichiers destinées soit à un premier noeud soit à un second noeud dans chacune desdites paires,
lorsque lesdites instructions de serveur de fichiers sont destinées audit premier noeud, répondre auxdites instructions de serveur de fichiers dans ledit premier noeud et stocker une copie desdites instructions de serveur de fichiers dans ledit second noeud, et
lorsque lesdites instructions de serveur de fichiers sont destinées audit second noeud, répondre auxdites instructions de serveur de fichiers dans ledit second noeud et stocker une copie desdites instructions de serveur de fichiers dans ledit premier noeud.

18. Procédé selon la revendication 17, incluant les étapes consistant à
lorsque lesdites instructions de serveur de fichiers sont destinées audit premier noeud et que ledit premier noeud est inopérant, répondre auxdites instructions de serveur de fichiers dans ledit second noeud en utilisant ladite copie dans ledit second noeud, et
lorsque lesdites instructions de serveur de fichiers sont destinées audit second noeud et que ledit second noeud est inopérant, répondre auxdites instructions de serveur de fichiers dans ledit premier noeud en utilisant ladite copie dans ledit premier noeud.

19. Procédé selon la revendication 12, incluant les étapes consistant à
recevoir une instruction de serveur de fichiers dans l'une desdites paires,
répondre à ladite instruction de serveur de fichiers dans un premier noeud tout en enregistrant ladite instruction de serveur de fichiers dans un second noeud, et
basculer dudit premier noeud audit second noeud.

20. Procédé selon la revendication 19, incluant les étapes consistant à
recevoir une seconde instruction de serveur de fichiers dans ladite une paire,
répondre à ladite instruction de serveur de fichiers dans ledit second noeud tout en enregistrant ladite instruction de serveur de fichiers dans ledit premier noeud, et
basculer dudit premier noeud audit second noeud.

21. Procédé selon la revendication 19, incluant les étapes pour commander lesdits éléments de stockage en réponse à ladite instruction de serveur de fichiers par ledit premier noeud alors que ledit second noeud est couplé auxdits éléments de stockage et ne commande pas lesdits éléments de stockage en réponse à ladite instruction de serveur de fichiers.

22. Programme informatique comportant des moyens de code de programme lesquels, lorsque exécutés sur un système informatique, amènent le système informatique à exécuter les étapes de l'une quelconque des revendications 12 à 21.
